(19) Europäisches Patentamt

European Patent Office

Office européen des brevets

(11) **EP 4 633 157 A1**

(12) **EUROPEAN PATENT APPLICATION**

(43) Date of publication:
**15.10.2025   Bulletin 2025/42**

(21) Application number: **24305565.4**

(22) Date of filing: **08.04.2024**

(51) International Patent Classification (IPC):
*H04N 19/13* (2014.01)     *H04N 19/167* (2014.01)
*H04N 19/18* (2014.01)     *H04N 19/169* (2014.01)
*H04N 19/91* (2014.01)

(52) Cooperative Patent Classification (CPC):
**H04N 19/91; H04N 19/13; H04N 19/167;
H04N 19/18; H04N 19/1887**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GALPIN, Franck**
  **35235 THORIGNE-FOUILLARD (FR)**
• **BOISSON, Guillaume**
  **35137 PLEUMELEUC (FR)**
• **BORDES, Philippe**
  **35890 LAILLE (FR)**
• **LEFEBVRE, Frederic**
  **35000 RENNES (FR)**

(74) Representative: **Interdigital**
**Immeuble ZEN 2**
**845 A, avenue des Champs Blancs**
**35510 Cesson-Sévigné (FR)**

(54) **METHOD AND APPARATUS FOR ENCODING/DECODING WITH EXPONENTIAL GOLOMB CODING**

(57)   In various implementations, method and devices are disclosed that reduce a coding cost associated with set of coefficients when coded with exponential Golomb. An example method may involve obtaining a set of N coefficient values. The method may involve predicting, based on a function of the set of N coefficient values and of a position of a current coefficient value in the set, an order of an exponential-Golomb code for coding the current coefficient value. The method may involve encoding the coefficient with the exponential-Golomb code of the predicted order to generate an encoded coefficient. The encoded coefficient may be included in video data.

FIG. 7

**Description**

TECHNICAL FIELD

The present embodiments generally relate to a method and an apparatus for video encoding or decoding a set of coefficients with exponential Golomb code.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. To reduce encoding artifacts, in-loop filters, for example deblocking filter, SAO (Sample Adaptive Offset), Adaptive Loop Filter), are applied to the reconstructed picture.

SUMMARY

In various implementations, methods and devices are disclosed that optimize encoding or decoding a set of coefficient values with exponential Golomb code.

According to a first aspect, a method of video decoding is disclosed that comprises that comprises obtaining an encoded set of N coefficient values. The method may involve predicting, based on a function of the set of N coefficient values and of a position of a current coefficient value in the set, an order of an exponential-Golomb code for coding the current coefficient value. The method may involve decoding the coefficient with the exponential-Golomb code of the predicted order to generate an encoded coefficient.

According to a second aspect, a method of video encoding is disclosed that comprises obtaining a set of N coefficient values. The method may involve predicting, based on a function of the set of N coefficient values and of a position of a current coefficient value in the set, an order of an exponential-Golomb code for coding the current coefficient value. The method may involve encoding the coefficient with the exponential-Golomb code of the predicted order to generate an encoded coefficient. The encoded coefficient may be included in video data.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.
FIG. 2 illustrates a block diagram of an embodiment of a video encoder.
FIG. 3 illustrates a block diagram of an embodiment of a video decoder.
FIG. 4 illustrates example adaptive loop filter (ALF) shapes.
FIG. 5 illustrates a block diagram of an in-loop-filtering process according to an embodiment.
FIG. 6 illustrates example filter shape of a signaled filter.
FIG. 7 illustrates a method for encoding/decoding a video according to an embodiment.

DETAILED DESCRIPTION

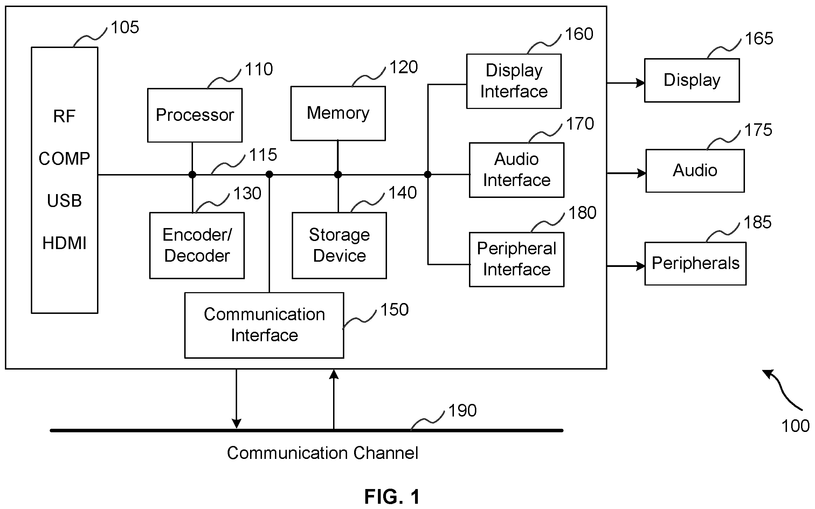

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

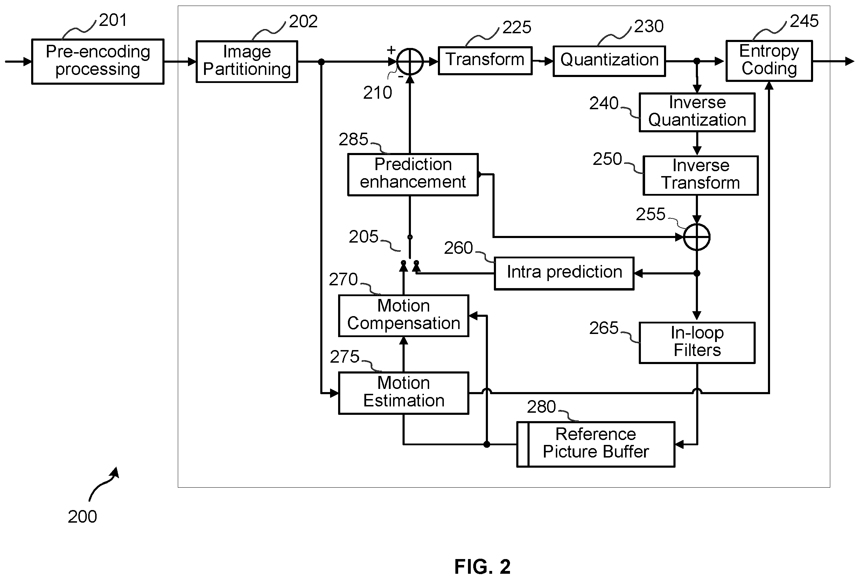

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

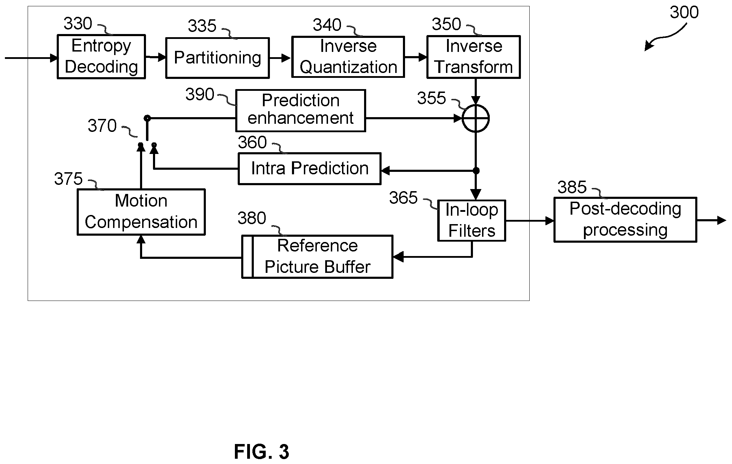

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

A syntax cost of adaptive loop filter (ALF) syntax elements may be reduced. Feature(s) described herein may be extended to other (e.g., any other) in-loop or post-filter where coefficients are signaled in the bitstream. Feature(s) described herein may be extended to other (e.g., any other, for instance transform coefficients) set of coefficients that are signaled in the bitstream.

Feature(s) associated with ALFs are provided herein.

An ALF may be based on adaptive filters. Adaptive filters may be applied to reduce the mean squared error (MSE) between the original and the reconstructed samples. For example, adaptive filters may be applied to reduce the mean squared error (MSE) between the original and the reconstructed samples using Wiener-based filtering. An ALF may be the last post-filter applied to the output of sample adaptive offset (SAO).

An ALF may include a classification of non-overlapping sub-blocks (e.g., based on local sample gradients of the sub-blocks). For a class (e.g., each class), a specific filter may be applied (e.g., from among the different filters signaled in the bitstreams). Based on the classification, a geometric transformation of coefficients within a filter shape (e.g., 90-degree rotation, diagonal or vertical flip, etc.) may be applied.

Feature(s) associated with filter shape are provided herein.

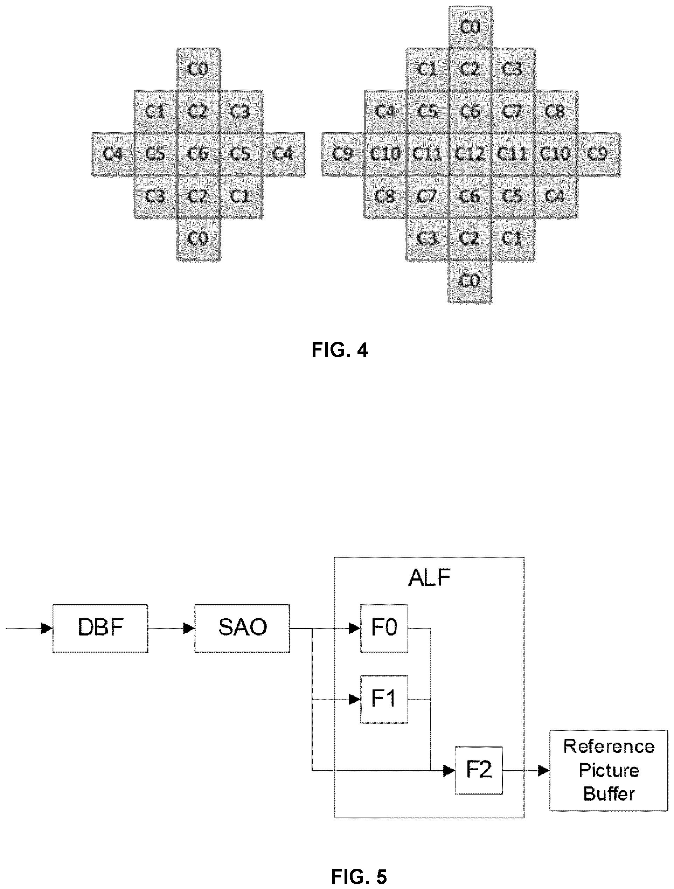

One or more (e.g., two) filter shapes (e.g., 7×7 diamond shape and/or 5×5 diamond shape) may be used for Luma and Chroma components (e.g., a 7×7 diamond shape for Luma components and/or 5×5 diamond shape for Chroma components, as shown in FIG. 5). A square (e.g., each square) may correspond to a Luma or a Chroma sample. The center square may denote the current to-be-filtered sample. To reduce the signaling overhead and/or the number of multiplications, the filter coefficients may use point-symmetry.

FIG. 4 illustrates example ALF filter shapes. For example, as shown on the left of FIG. 4, a 5×5 diamond may be used for Chroma components. As shown on the right of FIG. 4, a 7×7 diamond may be used for Luma components.

An integer filter coefficient (e.g., each integer filter coefficient), $c_i$, may be represented with n-bit fractional precision. DC may denote the lowest frequency of a signal (e.g., an average of the signal). DC neutrality may be preserved. For example, preserving DC neutrality may indicate that a filter will preserve the average of the signal. To preserve DC neutrality, the sum of coefficients of one filter may be (e.g., must be) equal to 128 = 1 « $n$.

$$2\left(\sum_{i=0}^{N-2} c_i\right) + c_{N-1} = 128 \qquad\qquad (1)$$

In an example, n may be equal to 7.

In Eq. (1), the number of coefficients, N, may be equal to 13 for a 7x7 filter shape. In Eq. (1), the number of coefficients, N, may be equal to 7 for a 5x5 filter shape.

Feature(s) associated with linear filtering are provided herein.

A filtered sample value $\bar{R}(x, y)$ may be obtained (e.g., because of point-symmetry and DC neutrality) by adding the reconstructed sample $R(x, y)$ and a weighted sum of the differences between the to-be-filtered sample $R(x, y)$ and its neighboring samples:

$$\bar{R}(x,y) = R(x,y) + \left(\left\lceil \sum_{i=0}^{N-2} c_i \times (\Delta R_i^+ + \Delta R_i^-) \right\rceil + 64\right) \gg 7 \qquad (2)$$

with:

$$\Delta R_i^+ = R(x + x_i, y + y_i) - R(x,y)$$
$$\Delta R_i^- = R(x - x_i, y - y_i) - R(x,y) \qquad (3)$$

where $(x + x_i, y + y_i)$ and $(x - x_i, y - y_i)$ are the coordinates of the reconstructed samples corresponding to the $i$-th coefficient $c_i$ (e.g., point symmetry).

Feature(s) associated with non-linear filtering are provided herein.

If non-linear ALF is enabled, Eq. (2) may be modified as follows:

$$\bar{R}(x,y) = R(x,y) + \left\lceil \sum_{i=0}^{N-2} c_i \times (f_i^+ + f_i^-) + 64 \right\rceil \gg 7 \qquad (4)$$

with:

$$f_i^+ = \min\left(b_i, \max\left(-b_i, R(x + x_i, y + y_i) - R(x,y)\right)\right)$$
$$f_i^- = \min\left(b_i, \max\left(-b_i, R(x - x_i, y - y_i) - R(x,y)\right)\right) \qquad (5)$$

where $b_i$ is the clipping parameter for the coefficient $c_i$. The clipping parameter $b_i$ may be determined based on a clipping index $d_i$. For example, the clipping parameter $b_i$ may be derived as follows:

$$b_i = \begin{cases} 2^{BD} & \text{when } d_i = 0 \\ 2^{BD-1-2d_i} & \text{otherwise} \end{cases} \qquad (6)$$

where $BD$ denotes the sample bit depth. In examples, $d_i$ may be 0, 1, 2 or 3.

Feature(s) associated with luma sub-block classification are provided herein.

Filter adaptation at sub-block level may apply (e.g., only apply) to Luma. A sub-block (e.g., each sub-block, for example, 4×4) may be classified based on the sub-block's directionality ($D$) and/or Laplacian activity ($A$).

The activity value $A$ may be mapped to the range of 0 to 4, inclusively. The quantized value may be denoted as $\hat{A}$. A Luma sub-block (e.g., each Luma sub-block) may be categorized into a class. For example, a Luma sub-block may be categorized into a class of the 25 classes represented by:

$$C = 5D + \hat{A} \qquad (7)$$

A class (e.g., each class) may have an assigned filter (e.g., its own filter assigned). Classification may not be applied for Chroma.

Feature(s) associated with geometric transformations are provided herein.

A geometric transformation (e.g., a rotation or diagonal and/or vertical flipping) may be applied to the filter coefficients (e.g., before filtering each Luma sub-block). The geometric transformation may be applied, for example, depending on the sub-block gradient values. The geometric transformation may align the directionality of the different

blocks (e.g., to reduce the number of ALF classes). For example, applying the geometric transformation may allow a sub-block with a horizontal edge and a sub-block with a vertical edge to both have the same directionality $D$.

Feature(s) associated with coding tree block (CTB)-level filter selection are provided herein. Adaptive loop filtering may involve filter adaptation at the CTB level (e.g., in addition to the Luma sub-block-level classification).

A Luma CTB may use a filter set calculated for the current slice. A Luma CTB may use a filter set (e.g., one of the filter sets) calculated for the already-coded slices. A Luma CTB may use an offline trained filter set (e.g., from N offline trained filter sets, for example, where N = 16). Within a Luma CTB (e.g., each Luma CTB), a filter (e.g., from the chosen filter set) to be applied to a sub-block (e.g., each sub-block) may be determined based on the class C calculated in Eq. (7) for the block.

Chroma may use (e.g., only use) CTB-level filter adaptation. One or more (e.g., up to 8) filters may be used for Chroma components in a slice. A CTB (e.g., each CTB) may select one of the filters.

Feature(s) associated with ALF syntax are provided herein.

Filter coefficients and/or clipping indices may be carried in one or more ALF adaptation parameter sets (APSs). An ALF APS may include one or more (e.g., up to 8) Chroma filters and/or a (e.g., one) Luma filter set (e.g., with up to 25 filters). An index $i_C$ may be included for each Luma class (e.g., each of the 25 Luma classes). Classes having the same index $i_C$ may share the same filter. By merging different classes, the number of bits used (e.g., required) to represent the filter coefficients may be reduced. The absolute value of a filter coefficient may be represented using a zero-order exponential-Golomb code and (e.g., followed by) a sign bit for non-zero coefficients. If clipping is enabled, a clipping index may be signaled for a filter coefficient (e.g., each filter coefficient) using a (e.g., two-bit) fixed length code.

Filter control syntax elements may include one or more (e.g., two) types of information. ALF On/Off flags may be signaled at sequence-, picture-, slice-, and/or CTB-levels. Chroma ALF may be enabled at picture- and/or slice-level if (e.g., only if) Luma ALF is enabled at the corresponding level. Filter usage information may be signaled at picture-, slice-, and/or CTB-level (e.g., if ALF is enabled at that level). Referenced ALF APS IDs may be coded at slice-level or at picture-level (e.g., if all the slices within the picture use the same APSs). Luma component may reference one or more (e.g., up to 7) ALF APSs. Chroma components may reference a (e.g., 1) ALF APS. For a Luma CTB, an index may be signaled. The index may indicate which ALF APS or offline-trained Luma filter set is used. For a Chroma CTB, the index may indicate which filter in the referenced APS is used.

Feature(s) associated with encoder-side processes are provided herein.

The encoder may calculate value(s) of ALF syntax (e.g., as described herein) by minimizing a rate-distortion cost. The rate-distortion cost may be a weighted sum of the distortion (e.g., measured as the square error between the original samples and the sample after applying the ALF filter) and the number of bits used (e.g., required) to transmit ALF syntax elements.

Filter coefficients may be calculated by solving one or more Wiener-Hopf equations. The statistics used (e.g., required) to calculate filter coefficients and estimate distortion may be collected for the possible combinations (e.g., all possible combinations) of clipping indices. The statistics may be collected for a CTB (e.g., separately for each CTB). In the case of a Luma component, the statistics may be collected for a class of a CTB (e.g., each class of each CTB).

ALF developments may be unstandardized. Feature(s) associated with a classifier (e.g., a new classifier) and fixed filtering for Luma are provided herein.

A classifier may be based on Luminance bands. C0 may denote the legacy Laplacian-based classifier. C1 may denote the classifier (e.g., the band classifier) based on Luminance bands.

FIG. 5 illustrates a block diagram of an in-loop-filtering process according to an embodiment. One or more (e.g., three) different sets of filters (e.g., F0, F1 and F2) may be used to filter a Luma sample. Sets F0 and F1 may include fixed filters (e.g., filters with coefficients trained for classifiers C0 and C1). Coefficients of filters in set F2 may be signaled. In an example, $R_0(x, y)$ and $R_1(x, y)$ may denote the intermediate sample values filtered by F0 and F1, respectively. The filter F2 may be applied to $R_0(x, y)$, $R_1(x, y)$, and the neighboring samples to derive a final filtered sample. For example, the final filtered sample may be represented as:

$$\bar{R}(x, y) = R(x, y) + \left[\sum_{i=0}^{19} c_i \times (f_i^+ + f_i^-)\right] + \left[\sum_{i=20}^{21} c_i \times g_i\right] \qquad (8)$$

where $f_i^{+/-}$ denotes the clipped difference between a neighboring sample and $R(x,y)$, and $g_i$ denotes the clipped difference between $R_{20-i}(x, y)$ and a current sample value. FIG. 5 illustrates the derivation of the final filtered sample (e.g., using an ALF process).

F0 and F1 may be pre-learned filters trained on classifiers C0 and C1, respectively. F2 may be signaled. F2 may use either classifier C0 or C1. The filter coefficients $(c_i)_{0 \le i \le 21}$ may be signaled.

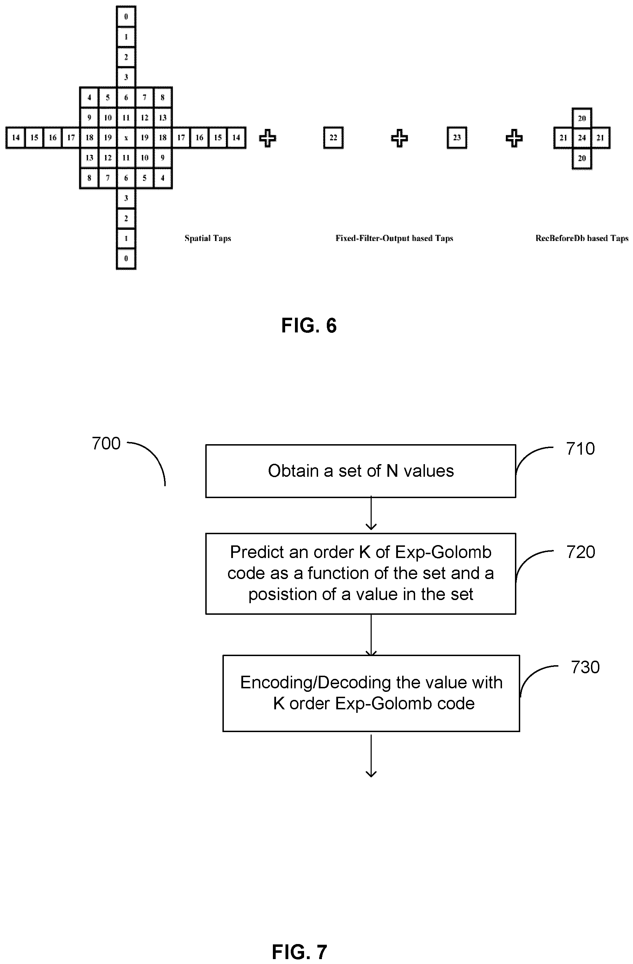

FIG. 6 illustrates an example filter shape of the signaled filter F2. Filter shapes and sizes may be changed.

Samples may be considered before deblocking in the signaled filter, as illustrated in FIG. 6.

Signaled filter input may be diversified. For example, filter input may be diversified with collocated samples in reference pictures, pre-DBF samples (e.g., that have been filtered by a fixed filter), or residual samples. A classifier based on residue L1 may be used.

Feature(s) associated with residual coefficient coding are provided herein.

More generally, the exponential Golomb (exp-Golomb) coding may not be limited to the coding of ALF syntax. An exponential Golomb (exp-Golomb) coding may be used to code a set of coefficients, for example the residual coefficients. The residual coefficients coding of a transform unit may use a combination of cabac coding and exponential Golomb (exp-Golomb) coding. Part of the absolute value of the coefficient is coded using a series of cabac bins denoting if the coefficient is zero, greater than 1, greater than 2 etc. Then, if the coefficient is still greater than the maximum value encoded with the cabac part, an exp-Golomb coding is applied on the remainder.

Feature(s) associated with residual coefficient coding are provided herein.

An exponential-Golomb code (exp-Golomb) is a type of universal code. To encode any non-negative integer x using the exp-Golomb code:

1. Write down x+1 in binary
2. Count the bits written, subtract one, and write that number of starting zero bits preceding the previous bit string.

For order-k exp-Golomb, to encode a non-negative integer x in an order-k exp-Golomb code:

1. Encode $\lfloor x/2k \rfloor$ using order-0 exp-Golomb code described above
2. Encode x mod 2k in binary

For instance, VVC specification describes how syntax elements are decoded using order-k exp-Golomb. This process is invoked when the descriptor of a syntax element in the syntax tables is equal to an unsigned value ue(v) or a signed value se(v). Outputs of this process are syntax element values. Syntax elements are coded as ue(v) or se(v) are exp-Golomb-coded with exp-Golomb order k equal to 0. The parsing process for these syntax elements begins with reading the bits starting at the current location in the bitstream up to and including the first non-zero bit, and counting the number of leading bits that are equal to 0. This process is specified as follows:

```
leadingZeroBits = -1
for( b = 0; lb; leadingZeroBits++ ) (1507)
            b = read_bits( 1 )
```

The variable codeNum is then assigned as follows:

$$\text{codeNum} = ( 2\text{leadingZeroBits} - 1 ) * 2k + \text{read\_bits}( \text{leadingZeroBits} + k ) \qquad (1508)$$

where the value returned from read_bits( leadingZeroBits ) is interpreted as a binary representation of an unsigned integer with most significant bit written first.

Table 48 illustrates the structure of the order-0 exp-Golomb code by separating the bit string into "prefix" and "suffix" bits. The "prefix" bits are those bits that are parsed for the computation of leadingZeroBits, and are shown as either 0 or 1 in the bit string column of Table 48. The "suffix" bits are those bits that are parsed in the computation of codeNum and are shown as xi in Table 48, with i in the range of 0 to leadingZeroBits - 1, inclusive. Each xi is equal to either 0 or 1.

*Table 48 - Bit strings with "prefix" and "suffix" bits and assignment to codeNum ranges (informative)*

| Bit string form | Range of codeNum |
|---|---|
| 1 | 0 |
| 0 1 $x_0$ | 1..2 |
| 0 0 1 $x_1$ $x_0$ | 3..6 |
| 0 0 0 1 $x_2$ $x_1$ $x_0$ | 7..14 |
| 0 0 0 0 1 $x_3$ $x_2$ $x_1$ $x_0$ | 15..30 |
| 0 0 0 0 0 1 $x_4$ $x_3$ $x_2$ $x_1$ $x_0$ | 31..62 |

(continued)

| Bit string form | Range of codeNum |
|---|---|
| ... | ... |

Table 49 illustrates explicitly the assignment of bit strings to codeNum values.

*Table 49 - Exp-Golomb bit strings and codeNum in explicit form and used as ue(v) (informative)*

| Bit string | codeNum |
|---|---|
| 1 | 0 |
| 0 1 0 | 1 |
| 0 1 1 | 2 |
| 0 0 1 0 0 | 3 |
| 0 0 1 0 1 | 4 |
| 0 0 1 1 0 | 5 |
| 0 0 1 1 1 | 6 |
| 0 0 0 1 0 0 0 | 7 |
| 0 0 0 1 0 0 1 | 8 |
| 0 0 0 1 0 1 0 | 9 |
| ... | ... |

Depending on the descriptor, the value of a syntax element is derived as follows:
If the syntax element is coded as ue(v), the value of the syntax element is equal to codeNum. Otherwise (the syntax element is coded as se(v)), the value of the syntax element is derived by invoking the mapping process for signed exp-Golomb codes as specified in clause 9.2.2 with codeNum as input.

To reduce the coding cost of a set of coefficients (e.g., ALF syntax or residual coding), it is proposed to modify exp-Golomb coding by predicting exp-Golomb order.

In the following, the example of ALF coefficients filter coding is described but the present principles may apply to any set of coefficients where the dynamic of the coefficients is correlated inside the set. For instance, the ALF coefficients set is a set of N values representing the values of the filter to apply. According to another example, the residual coefficients is a set of N values representing the values of the transformed and quantized residual coefficients in a transformed unit may also be compatible with the present principles.

Accordingly, the present document proposes to. determine using a predictive function depending on the set of N values and on a position in the set of a current value, an order of an exponential-Golomb code for coding a current value in the set of N values.

According to a first embodiment, the predictive function is implemented as a LUT
According to a second embodiment, the predictive function is a linear function of the order previously determined.

According to a third embodiment, an optimized exp-Golomb code of the coefficients is proposed knowing the coefficients representation.

FIG. 7 illustrates a method for encoding/decoding a video according to an embodiment. The method 700 of FIG. 7 may be implemented in an encoder of FIG. 2 or a decoder of FIG. 3. For instance, the method of FIG. 7 comprises encoding or decoding 730 a set of N coefficient values with K order Exp-Golomb code. For instance, the set of N coefficient values may be the ALF coefficients of a filter or may be the transformed and quantized residual coefficients in a transformed unit. More generally, any set of coefficients where the dynamic of the coefficients is correlated inside the set may be processed. At the encoding, in a step 710, a set of N coefficient values is obtained. At the decoding, an information on the set of N coefficient values to be decoded as well as a position of a current coefficient to decode in the set are obtained. In a step 720, an order K of an exponential-Golomb code for coding the current coefficient value is predicted based on a function of the set of N coefficient values and of a position of a current coefficient value in the set as described hereafter with the different embodiment. For example to determine such function, a dataset containing a large number of filter coefficients is used, and a k-mean algorithm is used to produce N set of coefficient orders which minimize the coding cost of the filters of the dataset. In the encoding/decoding 730 of the coefficient value with the exponential-Golomb code, the predicted order is used for the exponential-Golomb code of that coefficient.

Various embodiments are described in the following that may be used in combination or independently.

Feature(s) associated with Exp-Golomb order-predicted exp-Golomb coding are provided herein.

FIG. 4 shows an example of transmitted coefficients shape of ALF APS. The APS coding the filter set (up to 25 filters), is composed of the number of filters to encode (or a mode for which we have a known number of coefficients), then for each filter and for each filter tap of this filter, the absolute value and the sign of each filter coefficient, plus the corresponding clipping index.

The absolute values of filter coefficients are encoded using an order-0 exp-Golomb coding or a set of 2 different order exp-Golomb codings. The orders are fixed in the encoder, therefore not adaptive.

According to a first embodiment, the exp-Golomb order of each coefficient absolute value is deduced from a LUT. The LUT values are known at both encoder and decoder. When several LUTs are used, the LUT to be used is signaled with an index, for example for each filter set. In a variant the LUT to be used is signaled for each filter inside a filter set. The order K of an exponential-Golomb code for coding the coefficient absolute value is obtained by addressing the LUT identified by the index at a position corresponding a position of the coefficient absolute value in the filter set.

In a variant, an additional offset is computed to determine the exp-Golomb order. The additional offset may be a linear function of a signaled parameter. For instance, a signaled parameter t, the Ex-Golomb order may be:

$$order = scale * t + offset$$

where scale and offset are known at both encoder and decoder. The scale and offset may be different depending on the QP or the mode of the filter.

An example of a function predicting the final exp-Golomb order used to decode a coefficient at position i in the set of N coefficients using both the offset and a LUT according to a variant of the first embodiment may be as follows:

$$order[i] = max(order\_min, LUT[n][i] + scale * t + offset)$$

where order_min is the smallest order to use, for example order=0 or order=1. LUT[n] is the LUT to used (n being signaled), scale is a factor applied on t, t being signaled and offset being a fixed parameter. Order_min, scale, LUT and offset are fixed and known at both encoder and decoder. "n" and "t" are signaled in the bitstream. The LUTs may also be different for luma or chroma filtersets.

An example of pseudo code for decoding a filter set of filter coefficients when only 2 LUTs are possible, 2 different additional offsets, and everything is transmitted per filterset is as follows:

```
Function Decode a filterset
n = Read index of the LUT // n bits to signal the LUT to use
t = read offset // n bits to signal the additional offset
For each filter in the filterset do
For each coefficient at position i in the filter
   order[i] = max(order_min, LUT[n][i] + scale * t + offset)
   c[i] = decodeExpGolomb(order[i])
```

A decodeExpGolomb(order) then decode the coefficient as:

$$prefix = order + unary\_decoding()$$

where the unary_decoding count the number of 1 (alt. number of 0) until a terminating 0 (alt. terminating 1).

Then the value (when the prefix is not 0) is decoded by reading the binary code using prefix number of bits and adding the most significant bit deduced from the prefix value.

In a variant, instead of using an exp-Golomb decoding (prefix and suffix), the binary values are directly read in the bitstream using binary representation using a number of bits directly given by the LUT, or alternatively the LUT and the additional offset. In this mode, it means all coefficients at position i must have a value below (1<<order[i]) using the value order[i] as described above. The use of direct binarization is for example signaled using a flag before decoding the filterset. In a variant, when this mode is used, the LUT, scale and offset can also be different from the ones used when using the exp-Golomb decoding.

In a variant, the LUT selection is not only derived from a signaled value n but also selected depending on the other parameters. Typically, at picture level, the LUT can depend on the QP (quantization parameter) of the slice, the temporal id of the picture. In a variant, the LUT can also depend on the type of classifiers used by the filterset (Laplacian classifier, band classifier etc.).

In another variant, the LUT is selected depending on the classifier using the filterset. The information is available before the filter decoding in the mapping between the class of the classifier and the filter index. The selection can for example be on the number of classes using the filter or the class type (high activity or low activity etc.).

According to a second embodiment, the exp-Golomb order of each coefficient absolute value is deduced from previously predicted order.

In a variant, the exp-Golomb order is computed as:

$$order[i] = max(order\_min, predict(n,i) + scale * t + offset)$$

where predict(i,n) is a prediction of the exp-Golomb order. The parameter n is transmitted to select the best predictor for the set of coefficients. The parameter i is the index of the current coefficient.

The function predict() is known at encoder and decoder. An example of such a function is a linear combination of the order of the previously decoded coefficients:

$$predict(n,i)=(a[n][i]*order[j]+ b[n][i]*order[k]+c[n][i]*order[m]+d[n][i])/e[n][i]$$

where a[n][i], ... e[n][i] are known values learnt offline.

The value j, k, m are indexes that may depend on the value i. For example, the order of the last 3 decoded coefficients: j=i-1, k=i-2, m=i-3 (while for i<3, the function is adapted to use only available values). In a variant, the values j,k, m are adapted for each value i in order to maximize the correlation of the order[i] with previously decoded order. The values j,k and m are encoded in a LUT for each entry at i. In a variant more or less previous values are used.

Feature(s) associated with a maximum Exp-Golomb coding is provided herein.

As presented before, the order-0 exp-Golomb code comprises a bit string separated into "prefix" and "suffix" bits. The "prefix" bits are those bits that are parsed for the computation of leadingZeroBits, before the read of the termination bit '1'. In the variant where a unitary code is used, the prefix bits are set to '1' while the termination bit is '0'.

In a variant, instead of using the standard exp-Golomb coding, the prefix is coded using the knowledge of the maximum number of bits uses by a coefficient. In ECM, the number of bits used to encode a coefficient is signaled in the APS using the syntax element alt_luma_bits. The value is for example in the range [5-8] bits (+1 bit for the sign). The number of bits may also be fixed (for example for the chroma filters). For example, the number of bits may be set to the value 8.

According to a variant, when decoding a coefficient, the prefix may be read using unary code, the termination 0 may not be read if the total number of bits for the exp-Golomb order is already equal to the maximum number of bits used to encode a coefficient. For instance, if the order for the coefficient is 4, and the max_nb_bits is 4, then no bit are read for the prefix.

An example of pseudo code for decoding with Exp-Golomb is as follows:

Function decodeExpGolomb(order)

```
b=0
nb_leadings = -1
while(!b) {
  b=read
  nb_leadings++;
}
symbol = (1<<nb_leading)-1)<<order
if (nb_leading+order>0) {
  symbol+=read(nb_leading+k)
}
return symbol
```

An example of pseudo code for decoding may be modified for maximum Exp-Golomb as follows:

Function decodeExpGolomb(order, max_nb_bits)

```
b=0
if (order>=max_nb_bits) {
  return read(max_nb_bits)
}

nb_leading=-1
prefix= order+nb_leading
while(!b&&prefix<max_nb_bits-1) {
  b=read
  prefix++;
  nb_leading++;
}
if ( (!b && prefix==max_nb_bits-1)
  ||(b&&prefix==max_nb_bits)) {
  nb_leading++
}
symbol = (1<<nb_leading)-1)<<order
if (nb_leading+order>0) {
  symbol+=read(nb_leading+k)
}
return symbol
```

Where max_nb_bits is deduced from the number of bits used to encode a coefficient. The order of the coefficient is also clipped to the max_nb_bits since we know that a coefficient cannot use more than max_nb_bits to be encoded. If the order is greater or equal to the max number of bits, the value is read without decoding the prefix. If the order is less, then the final bit of the maximum prefix is sometimes not read but deduced from the last bit read

According to this variant, the order of the exponential-Golomb code may be encoded/decoded using a maximum number of bits used by a value in the set of N values and wherein responsive to determining that the number of bits read for the prefix is equal to the maximum number of bits used by a value in the set of N values, the reading of a termination bit of the prefix may be skipped.

The feature of a maximum Exp-Golomb coding described in this application can be used individually or in combination with the feature of predicting the order of the Exp-Golomb code as presented above.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "j", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

## Claims

1. A method for video encoding, the method comprising:

    obtaining (700) a set of N coefficient values;
    predicting (720), based on a function of the set of N coefficient values and of a position of a current coefficient value in the set, an order of an exponential-Golomb code for coding the current coefficient value;
    encoding (730) the coefficient value with the exponential-Golomb code of the predicted order to generate an encoded coefficient; and
    including, in video data, the encoded coefficient.

2. A method for video decoding, the method comprising:

    obtaining an encoded set of N coefficient values;
    predicting (720), based on a function of the set of N coefficient values and of a position of a current coefficient value in the set, an order of an exponential-Golomb code for coding the current coefficient value; and
    decoding (730) the coefficient value with the exponential-Golomb code of the predicted order from encoded set of N coefficient values.

3. The method of any of claims 1 or 2, wherein predicting, based on a function of the set of N coefficient values and of a position of a current coefficient value in the set, an order of an exponential-Golomb code for coding the current coefficient value further comprises:

    determining a first value as a value in a LUT identified by an index at a position corresponding to a position of current coefficient value in the set of N coefficient values, the index being associated with the set of N values;
    wherein the order of an exponential-Golomb code for coding the current coefficient value being the first value.

4. The method of claim 3, further comprising determining a second value as a linear function of an offset parameter and wherein the order of an exponential-Golomb code for coding the current value being a sum of the first value and the second value.

5. The method of claim 4, wherein the offset parameter and the index identifying a LUT are encoded or decoded.

6. The method of claim 4, wherein responsive to determining that the sum of the first value and the second value is lower than a minimum order, the order of an exponential-Golomb code for coding the current value is a minimum order.

7. The method of any of claims 1 or 2, wherein predicting, based on a function of the set of N coefficient values and of a position of a current coefficient value in the set, an order of an exponential-Golomb code for coding the current coefficient value further comprises:

    determining a first value as a prediction function applied to an index and to a position corresponding to a position of current value in the set of N values, the index identifying the prediction function associated with the set of N values, wherein the order of an exponential-Golomb code for coding the current value being the first value.

8. The method of claim 7, wherein the prediction function is a linear combination of previously decoded values.

9. The method of any of claims 7 or 8, further comprising determining a second value as a linear function of an offset parameter and wherein the order of an exponential-Golomb code for coding the current value being a sum of the first value and the second value.

10. The method of claim 9, wherein the offset parameter and the index identifying the prediction function associated with the set of N values are encoded or decoded.

11. The method of any one of claim 1 and claims 3-12, wherein a prefix of the exponential-Golomb code is encoded using a maximum number of bits used by a value in the set of N values and wherein responsive to determining that a number of bits read for the prefix is equal to the maximum number of bits used by a value in the set of N values, skipping a read of a termination bit of the prefix.

12. The method of any one of claim 2 and claims 3-10, wherein the prefix of the exponential-Golomb code is decoded using a maximum number of bits used by a value in the set of N values and wherein responsive to determining that a number of bits read for a prefix is equal to the maximum number of bits used by a value in the set of N values, skipping reading of a termination bit of the prefix.

13. An apparatus, comprising one or more processors, wherein the one or more processors are configured to perform the method of any of claims 1-12.

14. A signal comprising video data, formed by performing the method of any one of claim 1 and claims 3-12.

15. A computer readable storage medium having stored thereon instructions for video encoding according to the method of any one of claim 1 and claims 3-12

**FIG. 1**

**FIG. 2**

300

330 Entropy Decoding

335 Partitioning

340 Inverse Quantization

350 Inverse Transform

355

390 Prediction enhancement

360 Intra Prediction

370

375 Motion Compensation

380 Reference Picture Buffer

365 In-loop Filters

385 Post-decoding processing

**FIG. 3**

FIG. 4

FIG. 5

Spatial Taps          Fixed-Filter-Output based Taps          RecBeforeDb based Taps

**FIG. 6**

700

Obtain a set of N values — 710

Predict an order K of Exp-Golomb code as a function of the set and a posistion of a value in the set — 720

Encoding/Decoding the value with K order Exp-Golomb code — 730

**FIG. 7**

**EUROPEAN SEARCH REPORT**

Application Number

EP 24 30 5565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/248006 A1 (LIM SUNG CHANG [KR] ET AL) 4 August 2022 (2022-08-04) * paragraphs [0865] - [0879]; figure 60 * | 1,2, 13-15 | INV. H04N19/13 H04N19/167 H04N19/18 |
| X | BROSS B ET AL: "Versatile Video Coding (Draft 6)", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O2001 13 July 2019 (2019-07-13), XP030293932, Retrieved from the Internet: URL:https://jvet-experts.org/doc_end_user/documents/15_Gothenburg/wg11/JVET-O2001-v2.zip JVET-O2001-v2.docx [retrieved on 2019-07-13] * sections 7.3.5.3, 7.4.6.3 * | 1,2, 13-15 | H04N19/169 H04N19/91 |
| A | US 2015/264362 A1 (JOSHI RAJAN LAXMAN [US] ET AL) 17 September 2015 (2015-09-17) * paragraphs [0045], [0104], [0110] * | 1-15 | **TECHNICAL FIELDS SEARCHED (IPC)** H04N |

-/--

The present search report has been drawn up for all claims

| Place of search | Date of completion of the search | Examiner |
|---|---|---|
| Munich | 3 September 2024 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 30 5565 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI ZHANG ET AL: "[G-PCC][EE13.63] Report on improved RAHT coefficients entropy coding", 142. MPEG MEETING; 20230424 - 20230428; ANTALYA; (MOTION PICTURE EXPERT GROUP OR ISO/IEC JTC1/SC29/WG11), , no. m62742 19 April 2023 (2023-04-19), XP030309786, Retrieved from the Internet: URL:https://dms.mpeg.expert/doc_end_user/d ocuments/142_Antalya/wg11/m62742-v1-m62742 .zip m62742 [G-PCC] [EE13.63] Improved entropy coding of RAHT coefficients.docx [retrieved on 2023-04-19] * section 3 * ----- | 1-15 | |
| A | WO 2022/192902 A1 (INNOPEAK TECH INC [US]) 15 September 2022 (2022-09-15) * paragraphs [0057] - [0066] * ----- | 1-15 | TECHNICAL FIELDS SEARCHED (IPC) |

The present search report has been drawn up for all claims

| Place of search | Date of completion of the search | Examiner |
|---|---|---|
| Munich | 3 September 2024 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5565

This annex lists the patent family members relating to the patent documents cited in  the above-mentioned European search report.
The members are as contained in the European Patent Office EDP file on
The European Patent Office is in no way liable for these particulars which are merely given for the purpose of information.

03-09-2024

| Patent document cited in search report | Publication date | Patent family member(s) | | Publication date |
|---|---|---|---|---|
| US 2022248006 A1 | 04-08-2022 | CN | 113940085 A | 14-01-2022 |
| | | KR | 20200144075 A | 28-12-2020 |
| | | US | 2022248006 A1 | 04-08-2022 |
| | | WO | 2020256413 A1 | 24-12-2020 |
| US 2015264362 A1 | 17-09-2015 | CN | 106105040 A | 09-11-2016 |
| | | CR | 20160423 A | 20-12-2016 |
| | | DO | P2016000246 A | 30-12-2016 |
| | | EP | 3117525 A1 | 18-01-2017 |
| | | GT | 201600184 A | 27-11-2018 |
| | | JP | 6527877 B2 | 05-06-2019 |
| | | JP | 2017514349 A | 01-06-2017 |
| | | KR | 20160133509 A | 22-11-2016 |
| | | MX | 363891 B | 05-04-2019 |
| | | NI | 201600135 A | 18-11-2016 |
| | | SV | 2016005283 A | 24-04-2017 |
| | | TW | 201547256 A | 16-12-2015 |
| | | US | 2015264362 A1 | 17-09-2015 |
| | | WO | 2015138911 A1 | 17-09-2015 |
| WO 2022192902 A1 | 15-09-2022 | CN | 116965028 A | 27-10-2023 |
| | | WO | 2022192902 A1 | 15-09-2022 |

EPO FORM P0459

For more details about this annex : see Official Journal of the European Patent Office, No. 12/82